# FASCICULE DE BREVET EUROPEEN

(11) **EP 2 663 759 B1**
(45) Date de publication et mention de la délivrance du brevet: **19.11.2014**
(21) Numéro de dépôt: 12702576.5
(22) Date de dépôt: 03.01.2012
(51) Int. Cl.: F02C 7/262

(54) **PROCÉDÉ DE DÉMARRAGE D'UNE TURBOMACHINE**
VERFAHREN ZUM STARTEN EINER TURBOMASCHINE
METHOD FOR STARTING A TURBOMACHINE

(30) Priorité: 11.01.2011 FR 1150206
(43) Date de publication de la demande: 20.11.2013
(73) Titulaire: Turbomeca, 64510 Bordes (FR)
(72) Inventeur: VERDIER, Hubert, Pascal, F-64800 Nay (FR); ETCHEPARE, Philippe, F-64000 Pau (FR); GIRALT, Pierre, F-64000 Pau (FR); REBERGA, Luc, F-64000 Pau (FR)
(74) Mandataire: Milien, Jean-Baptiste Aurélien
(86) Numéro de dépôt international: PCT/FR2012/050005
(87) Numéro de publication internationale: WO 2012/095590

(56) Documents cités:
- EP-A1- 1 953 454
- EP-A1- 2 264 297
- JP-A- 2002 357 128
- JP-A- 2003 328 777

## Description

La présente invention porte sur le domaine des turbomachines et notamment sur celui des turbomoteurs d'aéronefs.

La présente invention concerne plus précisément un procédé de démarrage d'une turbomachine, ladite turbomachine comportant :
- une chambre de combustion comprenant un dispositif d'allumage et au moins un injecteur principal, ladite chambre présentant une sortie ;
- un arbre relié à une roue de compresseur disposée en amont de la chambre de combustion pour son alimentation en air comprimé ;
- un démarreur relié audit arbre ;
ledit procédé comportant :
- une première étape de démarrage au cours de laquelle le démarreur est actionné afin d'entraîner l'arbre en rotation ; et
- une première étape d'allumage au cours de laquelle du carburant est injecté dans la chambre de combustion, le dispositif d'allumage étant quant à lui actionné. Pendant cette étape les injecteurs principaux sont de préférence alimentés en carburant.

Normalement, à l'issue de la première étape d'allumage, une combustion stable, initiée par le dispositif d'allumage, qui est le plus souvent une bougie, est installée dans la chambre de combustion ce qui conduit au démarrage de la turbomachine.

Lorsque le démarrage de la turbomachine a eu lieu, c'est-à-dire lorsque la turbine haute pression, entrainée en rotation par le flux de gaz brûlés sortant de la chambre de combustion, entraîne de manière autonome l'arbre en rotation, le dispositif d'allumage et le démarreur sont éteints.

Cependant, une tentative de démarrage de la turbomachine peut échouer si, par exemple, le couple du démarreur est trop élevé ou bien si la pression d'injection de carburant s'établie alors que l'arbre est déjà entraîné par le démarreur à une vitesse de rotation trop élevée. Ce dernier cas peut être dû par exemple à la présence d'air dans le circuit d'alimentation en carburant ou bien se produire lorsque la température extérieure est très basse.

Un but de la présente invention est de proposer un procédé de démarrage d'une turbomachine qui est plus fiable tout en permettant d'étendre le domaine de démarrage à des conditions difficiles, comme par exemple un démarrage à haute altitude ou bien à température très basse.

L'invention atteint son but par le fait que le procédé comporte en outre une étape de relance réalisée si la combustion n'est pas parfaitement installée alors que l'arbre a atteint une première valeur de vitesse prédéterminée, ladite étape de relance comprenant :
- une étape d'arrêt au cours de laquelle le démarreur et le dispositif d'allumage sont arrêtés;
- une seconde étape d'allumage au cours de laquelle du carburant est injecté dans la chambre de combustion, le dispositif d'allumage étant quant à lui actionné, cette seconde étape d'allumage étant réalisée lorsque la vitesse de rotation de l'arbre atteint une seconde valeur de vitesse prédéterminée ; et
- une seconde étape de démarrage au cours de laquelle le démarreur est à nouveau actionné afin d'entrainer l'arbre en rotation.

L'étape de relance est donc réalisée si l'allumage de la turbomachine a échoué.

Dans ces étapes d'allumage et de démarrage, l'injection de carburant est opérée par le biais de l'injecteur principal, ou lorsqu'il est présent, par le biais d'un injecteur de démarrage et de l'injecteur principal. L'injecteur de démarrage peut être distinct de l'injecteur principal ou bien être intégré dans ce dernier (cas d'injecteur principal à double circuit).

L'échec de l'allumage de la turbomachine est défini ici comme étant l'absence d'une combustion produisant suffisamment d'échauffement alors que l'arbre a atteint la première valeur de vitesse prédéterminée. Dans ce cas de figure, la vitesse de l'arbre se trouve en dehors d'une fenêtre de vitesse, appelée «fenêtre d'allumage », définie entre une très petite valeur de vitesse et une autre valeur de vitesse comprise entre les première et seconde valeurs de vitesse prédéterminées.

Qui plus est, la seconde étape d'allumage et la seconde étape de démarrage sont réalisées après l'étape de décélération.

On comprend donc que dans le cas où la première tentative d'allumage du turbomoteur a échoué, l'étape de relance a pour but de retenter le démarrage de la turbomachine. Cette étape est avantageusement réalisée lorsque la vitesse de rotation de l'arbre a suffisamment diminué, grâce à l'arrêt du démarreur, de manière à se situer à nouveau dans la fenêtre d'allumage.

De plus, grâce à l'invention, la vitesse de rotation de l'arbre reste davantage de temps dans la fenêtre d'allumage, grâce à quoi on maximise les chances de démarrage.

Selon l'invention, on ramène donc la vitesse de rotation de l'arbre dans la fenêtre d'allumage en arrêtant le démarreur avant de réaliser la seconde étape d'allumage. En d'autres termes, l'arbre décélère lors de l'étape d'arrêt.

De préférence mais non exclusivement, l'injection de carburant est arrêtée lors de l'étape d'arrêt.

Selon une variante, la seconde étape d'allumage et la seconde étape de démarrage peuvent être concomitantes.

De façon préférentielle mais non exclusivement, pour un turbomoteur d'aéronef du type hélicoptère, la première valeur de vitesse prédéterminée est comprise entre 15% et 20% du régime moteur maximal de la turbomachine, tandis que la seconde valeur de vitesse prédéterminée est comprise entre 10% et 15% du régime moteur maximal.

Avantageusement, l'étape d'arrêt est réalisée si la température de la sortie de la chambre de combustion, mesurée lorsque l'arbre a atteint la première valeur de vitesse prédéterminée, est inférieure à une première valeur de température prédéterminée.

La mesure de la température en sortie de la chambre de combustion est un indicateur avantageux du point de savoir si la combustion est correctement installée (c'est-à-dire si le ou les injecteurs principaux sont correctement allumés ou pas et/ou les injecteurs de démarrage sont correctement allumés ou pas).

La première valeur de température prédéterminée est donc choisie de sorte qu'une température mesurée en sortie de chambre de combustion qui lui est supérieure signifie que la chambre de combustion est très probablement correctement allumée.

A l'inverse, une température mesurée qui est inférieure à la première valeur de température prédéterminée signifie que l'allumage de la chambre de combustion ne s'est très probablement pas fait.

De manière préférentielle mais non exclusivement, la première valeur de température prédéterminée est comprise entre 150 et 250°C.

Selon une variante, la première valeur de température prédéterminée est déterminée à partir de la température du turbomoteur au début de la première étape d'allumage. Par exemple, la première valeur de température prédéterminée peut correspondre à une élévation de température de l'ordre de 100°C par rapport à la température du turbomoteur au début de la première tentative de démarrage.

Ainsi, si l'allumage de la chambre lors de la première étape d'allumage a échoué, cet échec étant détecté par une mesure de température en sortie de la chambre de combustion, on arrête le démarreur et le dispositif d'allumage jusqu'à ce que la vitesse de l'arbre devienne inférieure à la seconde valeur de vitesse prédéterminée, à la suite de quoi on réalise la seconde étape d'allumage.

Avantageusement, la seconde étape de démarrage est réalisée un laps de temps après la seconde étape d'allumage.

Un intérêt est de s'assurer du correct allumage de l'injecteur principal (ou de l'injecteur de démarrage, lorsqu'il est présent), avant d'augmenter à nouveau la vitesse de rotation de l'arbre, ce qui limite le risque de sortir à nouveau de la fenêtre d'allumage sans que la chambre ne soit allumée.

Préférentiellement, la seconde étape de démarrage est réalisée lorsque la température de la sortie de la chambre de combustion a atteint une seconde valeur de température prédéterminée.

Ce test permet de s'assurer que l'injecteur principal ou/et l'injecteur de démarrage sont correctement allumés.

Cette seconde valeur de température prédéterminée est inférieure à la première valeur de température prédéterminée. De préférence, la seconde valeur de température prédéterminée est comprise entre 50°C et 150°C.

Selon une variante, la seconde valeur de température prédéterminée est déterminée à partir de la température du turbomoteur au début de la seconde étape d'allumage. Par exemple, la seconde valeur de température prédéterminée peut correspondre à une élévation de température de l'ordre de 25°C par rapport à la température du turbomoteur au début de la seconde étape d'allumage.

Avantageusement, la seconde étape de démarrage est réalisée concomitamment à la seconde étape d'allumage.

A la suite de la seconde étape de démarrage, la vitesse de l'arbre augmente à nouveau et, selon l'invention, on répète l'étape de relance précitée si la combustion n'est toujours pas correctement installée dans la chambre de combustion alors que l'arbre a à nouveau atteint la première valeur de vitesse prédéterminée.

Avantageusement, le démarreur et le dispositif d'allumage sont arrêtés après que l'arbre a atteint une troisième valeur de vitesse prédéterminée.

La troisième valeur de vitesse prédéterminée supérieure à la seconde valeur de vitesse prédéterminée est choisie de telle sorte que lorsque la vitesse de l'arbre a atteint cette valeur, il est certain que la turbomachine est autonome.

A ce moment, la pulvérisation de carburant n'est opérée que par les injecteurs principaux.

De préférence, la troisième valeur de rotation prédéterminée est comprise entre 30% et 65% du régime moteur maximal.
Selon cette variante, l'étape de relance peut être répétée à plusieurs reprises en cas d'échecs successifs. Toutefois, il peut être avantageux de limiter le nombre de tentatives qui sera de préférence automatiquement commandé par des moyens de commande appropriés. A titre d'exemple non limitatif, uniquement deux tentatives de démarrage (une première étape de démarrage et une étape de relance) seront préférentiellement prévues dans le cas d'un moteur d'hélicoptère.

Selon un mode de réalisation préféré, la chambre comporte en outre un injecteur de démarrage, de préférence distinct du ou des injecteurs principaux. Au cours de la première étape d'allumage, l'injecteur de démarrage injecte du carburant dans la chambre de combustion.

On comprend donc que dans ce mode de réalisation, l'allumage d'une telle turbomachine, qui peut être par exemple, mais pas nécessairement, un turbomoteur d'hélicoptère, est réalisé par l'utilisation d'un ou plusieurs injecteurs dédiés que l'on appelle injecteurs de démarrage. En vue de démarrer le turbomoteur, la flamme de ces injecteurs est ensuite transmise au système d'injection principal qui est constitué par le ou les injecteurs principaux.

Dans ce mode de réalisation, l'injecteur de démarrage est, de manière préférentielle mais non exclusive, également arrêté au cours de l'étape d'arrêt de l'étape de relance.

En outre, toujours dans ce mode de réalisation, l'injecteur de démarrage injecte du carburant dans la chambre de combustion lors de la seconde étape d'allumage.

La présente invention porte également sur un programme d'ordinateur comportant des instructions pour l'exécution des étapes du procédé de démarrage selon l'invention, lorsque le programme d'ordinateur est exécuté sur un ordinateur. L'invention porte aussi sur un support d'enregistrement lisible par un calculateur sur lequel est enregistré le programme d'ordinateur précité.

L'invention concerne enfin un calculateur pour turbomoteur comportant le support d'enregistrement selon l'invention.

L'invention sera mieux comprise et ses avantages apparaîtront mieux à la lecture de la description qui suit, d'un mode de réalisation indiqué à titre d'exemple non limitatif. La description se réfère aux dessins annexés sur lesquels :
- la figure **1** est un graphique montrant l'évolution en fonction du temps de la température en sortie de la chambre de combustion, de la vitesse de rotation de l'arbre et de la pression d'injection de carburant, lors de la mise en oeuvre du procédé de démarrage selon l'invention ;
- la figure **2** est un diagramme illustrant le procédé de démarrage selon l'invention ; et
- la figure **3** illustre un turbomoteur d'hélicoptère comportant un calculateur pour la mise en oeuvre du procédé de démarrage selon l'invention.

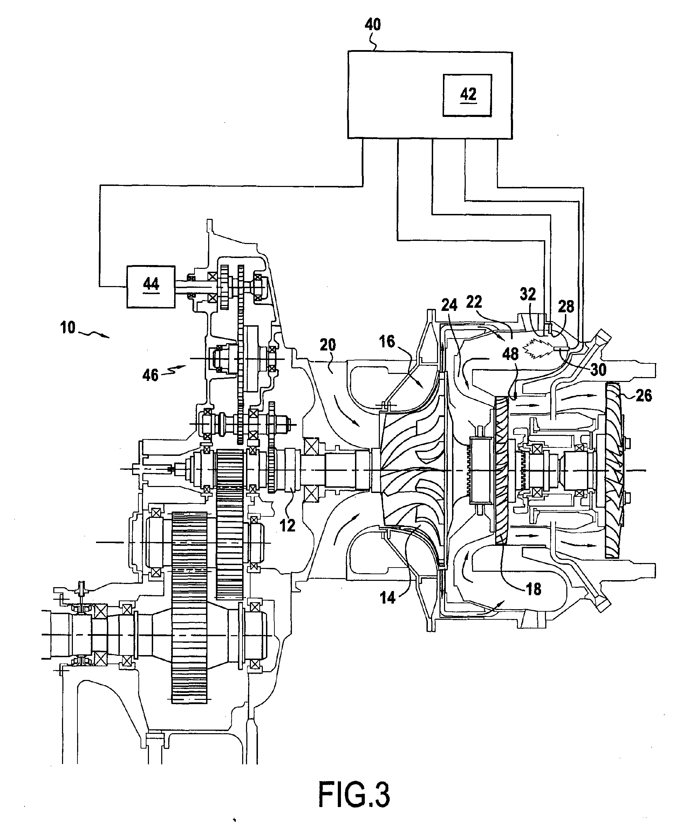

Un exemple de turbomoteur d'hélicoptère **10** est représenté sur la figure **3****.** Classiquement, le turbomoteur **10** comporte un arbre **12** sur lequel sont successivement montées une roue de compresseur **14** d'un étage de compression **16** et une roue de turbine haute pression **18.** Le turbomoteur **10** comporte en outre une entrée d'air frais **20** débouchant sur l'étage de compression. L'air comprimé par l'étage de compression **16** est amené dans une chambre de combustion **22** pour y être mélangé avec du carburant. Le mélange ainsi obtenu est brûlé et les gaz de combustion sont évacués de la chambre de combustion **22** par sa sortie **24.** Comme on le voit sur la figure **3****,** le flux de gaz brûlés entraine en rotation la roue de turbine haute pression **18** ainsi qu'une turbine libre **26** disposée en aval de la roue de turbine haute pression **18.**

Ainsi et de manière connue, en fonctionnement normal, l'arbre est entraîné en rotation grâce au flux de gaz brûlés généré par la chambre de combustion.

On s'intéresse ici plus particulièrement à la chambre de combustion **22.**

Comme on le voit sur la figure **3****,** la chambre de combustion comprend un ou plusieurs injecteurs de démarrage **28** (un seul étant représenté) et plusieurs injecteurs principaux **30** (un seul étant représenté).

Bien évidemment, le procédé de démarrage selon l'invention peut être utilisé dans une turbomachine dont la chambre de combustion est dépourvue d'injecteurs de démarrage ou lorsque l'injecteur principal fait également office d'injecteur de démarrage. Le mode de réalisation décrit ci-après n'est donc pas limitatif.

La fonction des injecteurs principaux est de pulvériser le carburant dans la chambre de combustion **22** en vue de son mélange avec l'air comprimé.

De plus, un dispositif d'allumage **32,** associé aux injecteurs de démarrage **28,** permet d'allumer ces derniers. Ce dispositif d'allumage **32** a pour fonction d'enflammer le carburant pulvérisé par les injecteurs de démarrage **28.** Ce dernier est par exemple une bougie destinée à produire une étincelle. L'allumage correct des injecteurs de démarrage **28** produit alors une flamme qui se propage dans la chambre et enflamme le carburant pulvérisé par les injecteurs principaux **30.**

Conformément à l'invention, le turbomoteur **10** comporte un calculateur **40** comprenant un support d'enregistrement **42** du type RAM, ROM, disque dur, ou tout autre type de mémoire, sur lequel est stocké un programme d'ordinateur, ce dernier comportant les instructions pour l'exécution des étapes du procédé de démarrage qui va être décrit ci-après. Le calculateur comporte en outre un microprocesseur pour effectuer les calculs. Le programme d'ordinateur est donc exécuté par le calculateur **40.**

Comme on le conçoit en se référant à la figure **3****,** les injecteurs de démarrage **28,** les injecteurs principaux **30** et le dispositif d'allumage **32** sont pilotés par le calculateur **40.**

Par ailleurs, l'arbre **12** est également relié à un démarreur **44** par le biais d'une chaîne de transmission **46** connue par ailleurs. Le démarreur **44** a classiquement pour fonction d'entraîner l'arbre en rotation lors de la phase de démarrage du turbomoteur.

Le démarreur **44** est également piloté par le calculateur **40.**

Enfin, une sonde de température **48,** reliée au calculateur **40,** est disposée en aval de la chambre de combustion **22** de manière à mesurer la température **T** des gaz brûlés sortant de la chambre de combustion **22,** de préférence entre la turbine haute pression **18** et la turbine libre **26.**

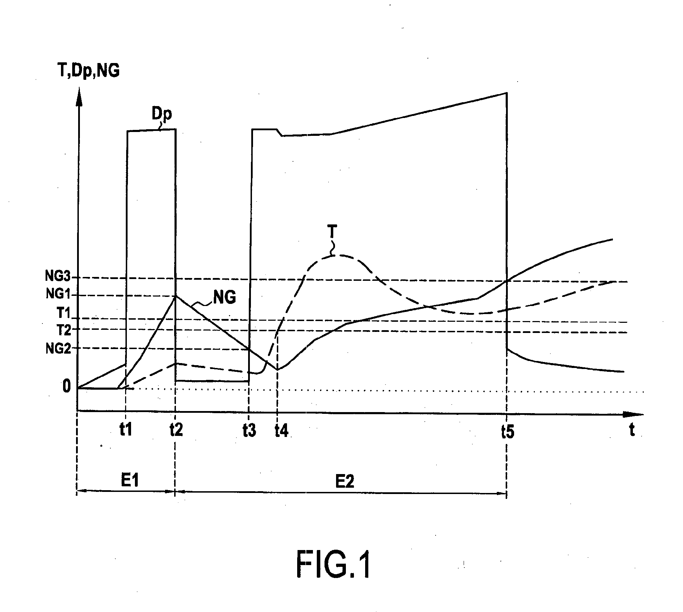

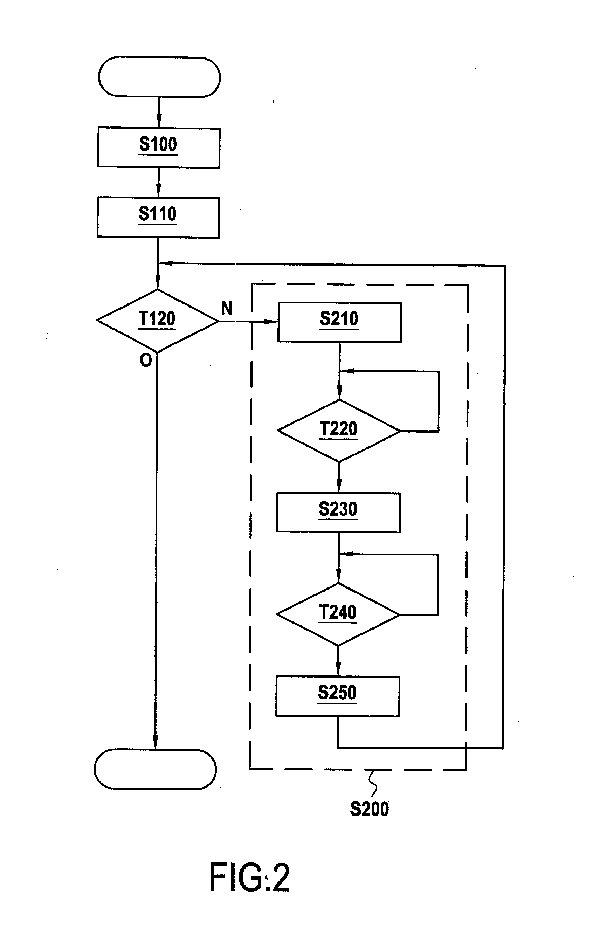

A l'aide des figures **1** et **2****,** on va tout d'abord décrire un mode de réalisation du procédé de démarrage selon l'invention pour le turbomoteur d'hélicoptère **10.** Bien évidemment, ce procédé de démarrage peut tout à fait être utilisé pour d'autres types de turbomachines.

Le graphique représenté sur la figure **1** résulte de la superposition de plusieurs courbes, à savoir la courbe de température **T** des gaz brûlés en aval de la chambre de combustion, la courbe de vitesse de rotation **NG** de l'arbre **12,** ainsi que la courbe de pression du carburant **Dp** pulvérisé par les injecteurs de démarrage **28.**

En abscisse figure le temps **t.**

Plus précisément, la figure **1** illustre le procédé de démarrage selon l'invention comportant avantageusement une étape de relance **E2** qui est réalisée après qu'une première tentative de démarrage **E1** a échoué.

Lors de la première tentative de démarrage, on réalise une première étape de démarrage **S100** au cours de laquelle le démarreur **44** est actionné afin d'entraîner l'arbre **12** en rotation. Cette étape est déclenchée un peu avant l'instant **t1.**

À l'instant **t1,** on réalise une première étape d'allumage **S110** au cours de laquelle le (ou les) injecteur de démarrage injecte du carburant dans la chambre de combustion **22,** le dispositif d'allumage étant quant à lui actionné afin d'enflammer le carburant pulvérisé par l'injecteur de démarrage. Autrement dit, à partir de l'instant **t1,** on cherche à allumer l'injecteur de démarrage puis les injecteurs principaux.

Entre l'instant **t1** et **t2,** la vitesse de l'arbre **12,** entrainé par le démarreur **44,** augmente alors que l'injecteur de démarrage pulvérise du carburant sans toutefois pouvoir produire une flamme suffisamment stable pour enflammer la chambre de combustion. Il s'ensuit que la température **T** n'augmente que très faiblement.

Selon l'invention, on mesure la température **T** à l'instant **t2** qui correspond à l'instant où la vitesse de rotation de l'arbre **12** dépasse une première valeur de vitesse prédéterminée **NG1,** en l'espèce 20% du régime moteur maximum NGmax, ce dernier étant de l'ordre de plusieurs milliers de tours par minute.

A ce stade, on réalise un test **T120 :** si la température mesurée est supérieure ou égale à une première valeur de température prédéterminée **T1,** en l'espèce 250°C, alors le test est positif et cela signifie que la combustion a été correctement initiée et que le turbomoteur démarre correctement.

Au contraire, si la température mesurée **T** est inférieure à **T1,** ce qui est le cas dans l'exemple représenté, alors le test est négatif ce qui signifie que les injecteurs principaux **30** n'ont pas été allumés, c'est-à-dire que la combustion n'est pas correctement installée et donc que le turbomoteur n'a pas démarré.

Dans ce cas de figure, conformément à l'invention, on réalise une étape de relance **S200** visant à retenter le démarrage du turbomoteur **10.**

Cette étape de relance **S200** comporte successivement les étapes suivantes.

Tout d'abord, au cours d'une étape d'arrêt **S210,** on arrête le démarreur **44,** l'injecteur de démarrage **28** ainsi que le dispositif d'allumage **32.** A la suite de quoi, la vitesse **NG** de l'arbre **12** décroit dans la mesure où ce dernier n'est plus entraîné par le démarreur.

Puis, au cours d'un test **T220,** on détermine si la vitesse **NG** de l'arbre **12** a atteint une seconde valeur de vitesse prédéterminée **NG2,** en l'espèce 10% du régime moteur maximal précité. Si le test **T220** est négatif alors on recommence le test. A l'inverse, si le test **T220** est positif, cela signifie que la vitesse de l'arbre **12** est revenue dans la plage d'allumage. On réalise alors selon l'invention, une seconde étape d'allumage **S230** afin d'allumer les injecteurs de démarrage, étape au cours de laquelle l'injecteur de démarrage **28** injecte du carburant dans la chambre de combustion **22,** le dispositif d'allumage **32 étant** quant à lui actionné. Sur le graphique de la figure **1****,** la seconde étape d'allumage **S230** débute à l'instant **t3.**

On réalise ensuite une seconde étape de démarrage **S250** au cours de laquelle le démarreur est à nouveau actionné afin d'entraîner en rotation l'arbre **12.** Cette seconde étape de démarrage est réalisée si l'on détecte, au cours d'un test **T240,** que la température **T** mesurée en sortie de la chambre de combustion a atteint une seconde valeur de température prédéterminée **T2,** en l'espèce 50°C. Sur l'exemple représenté, la seconde étape de démarrage **S250** est réalisée à l'instant **t4.** A partir de cet instant, la vitesse de rotation **NG** de l'arbre **12** augmente à nouveau.

Puis, à nouveau, on réalise le test **T120,** à savoir que l'on mesure la température en sortie de chambre de combustion **22** à l'instant où l'arbre **12** atteint à nouveau la valeur **NG1.** Sur le graphique, on constate qu'à cet instant, la température **T** est supérieure à la première valeur de température prédéterminée **T1,** indiquant que les injecteurs principaux **30** sont allumés et donc que le turbomoteur **10** a très probablement correctement démarré.

A l'instant **t5,** lorsque l'arbre a atteint une troisième valeur de vitesse prédéterminée **NG3,** en l'espèce 50% du régime moteur maximal, on arrête le démarreur, l'injecteur de démarrage et le dispositif d'allumage pour la raison que le turbomoteur fonctionne de manière autonome.

## Revendications

1. Procédé de démarrage d'une turbomachine (10), ladite turbomachine comportant :
- une chambre de combustion (22) comprenant un dispositif d'allumage et au moins un injecteur principal (30), ladite chambre présentant une sortie;
- un arbre (12) relié à une roue de compresseur (14) disposée en amont de la chambre de combustion pour son alimentation en air comprimé ;
- un démarreur (44) relié audit arbre ;
ledit procédé comportant :
- une première étape de démarrage au cours de laquelle le démarreur est actionné afin d'entrainer l'arbre en rotation ;
- une première étape d'allumage au cours de laquelle du carburant est injecté dans la chambre de combustion, le dispositif d'allumage étant quant à lui actionné ;
ledit procédé étant **caractérisé en ce qu'**il comporte en outre une étape de relance (S200) réalisée si l'injecteur principal (30) n'est pas allumé alors que l'arbre a atteint une première valeur de vitesse prédéterminée (NG1), ladite étape de relance comprenant :
- une étape d'arrêt (S210) au cours de laquelle le démarreur et le dispositif d'allumage sont arrêtés;
- une seconde étape d'allumage (S230) au cours de laquelle du carburant est injecté dans la chambre de combustion, le dispositif d'allumage étant quant à lui actionné, cette seconde étape d'allumage étant réalisée lorsque la vitesse de rotation de l'arbre atteint une seconde valeur de vitesse prédéterminée (NG2) ; et
- une seconde étape de démarrage (S250) au cours de laquelle le démarreur est à nouveau actionné afin d'entraîner l'arbre en rotation.

2. Procédé de démarrage selon la revendication **1,** dans lequel l'étape d'arrêt (S210) est réalisée si la température (T) de la sortie de la chambre de combustion, mesurée lorsque l'arbre (12) a atteint la première valeur de vitesse prédéterminée (NG1), est inférieure à une première valeur de température prédéterminée (T1);

3. Procédé de démarrage selon la revendication **1** ou **2,** dans lequel la seconde étape de démarrage (S250) est réalisée un laps de temps après la seconde étape d'allumage.

4. Procédé de démarrage selon les revendications **2** et **3,** dans lequel la seconde étape de démarrage (S250) est réalisée lorsque la température (T) en aval (24) de la chambre de combustion (22) a atteint une seconde valeur de température prédéterminée (T2).

5. Procédé de démarrage selon la revendication **1** ou **2,** dans lequel la seconde étape de démarrage (S250) est réalisée concomitamment à la seconde étape d'allumage (S230).

6. Procédé de démarrage selon l'une quelconque des revendications **1** à **5,** dans lequel le démarreur (44) et le dispositif d'allumage (32) sont arrêtés après que l'arbre (12) a atteint une troisième valeur de vitesse prédéterminée (NG3).

7. Procédé de démarrage selon l'une quelconque des revendications **1** à **6,** dans lequel la chambre de combustion comporte en outre un injecteur de démarrage (28), dans lequel ledit injecteur de démarrage injecte du carburant dans la chambre de combustion au cours de la première étape d'allumage, dans lequel ledit injecteur de démarrage est arrêté au cours de l'étape d'arrêt, et dans lequel ledit injecteur de démarrage injecte du carburant dans la chambre de combustion au cours de la seconde étape d'allumage.

8. Procédé selon les revendications **6** et **7,** dans lequel l'injecteur de démarrage est arrêté après que l'arbre a atteint la troisième valeur de vitesse prédéterminée (NG3).

9. Programme d'ordinateur exécuté sur un ordinateur (40) comportant des instructions pour l'exécution des étapes du procédé de démarrage selon l'une quelconque des revendications **1** à **8.**

10. Support d'enregistrement (42) lisible par un calculateur sur lequel est enregistré un programme d'ordinateur selon la revendication **9.**

11. Calculateur (40) pour turbomoteur comportant un support d'enregistrement selon la revendication **10.**

## Patentansprüche

1. Verfahren zum Starten einer Turbomaschine (10), wobei die Turbomaschine umfasst:
- eine Brennkammer (22), die eine Zündvorrichtung und wenigstens einen Hauptinjektor (30) umfasst, wobei die Kammer einen Auslass aufweist,
- eine Welle (12), die mit einem Verdichterrad (14) verbunden ist, das vor der Brennkammer für deren Beaufschlagung mit Druckluft angeordnet ist,
- einen Starter (44), der mit der Welle verbunden ist,
wobei das Verfahren umfasst:
- einen ersten Startschritt, im Laufe dessen der Starter betätigt wird, um die Welle drehanzutreiben,
- einen ersten Zündschritt, im Laufe dessen Treibstoff in die Brennkammer eingespritzt wird, wobei die Zündvorrichtung ihrerseits betätigt wird,
wobei das Verfahren **dadurch gekennzeichnet ist, dass** es ferner einen Wiederanlaufschritt (S200) umfasst, der ausgeführt wird, wenn der Hauptinjektor (30) nicht eingeschaltet ist, während die Welle einen ersten vorbestimmten Geschwindigkeitswert (NG1) erreicht hat, wobei der Wiederanlaufschritt umfasst:
- einen Abschaltschritt (S210), im Laufe dessen der Starter und die Zündvorrichtung abgeschaltet werden,
- einen zweiten Zündschritt (S230), im Laufe dessen Treibstoff in die Brennkammer eingespritzt wird, wobei die Zündvorrichtung ihrerseits betätigt wird, wobei dieser zweite Zündschritt ausgeführt wird, wenn die Rotationsgeschwindigkeit der Welle einen zweiten vorbestimmten Geschwindigkeitswert (NG2) erreicht, und
- einen zweiten Startschritt (S250), im Laufe dessen der Starter erneut betätigt wird, um die Welle drehanzutreiben.

2. Startverfahren nach Anspruch 1, wobei der Abschaltschritt (S210) ausgeführt wird, wenn die Temperatur (T) des Auslasses der Brennkammer - welche gemessen wird, wenn die Welle (12) den ersten vorbestimmten Geschwindigkeitswert (NG1) erreicht hat - niedriger ist als ein erster vorbestimmter Temperaturwert (T1).

3. Startverfahren nach Anspruch 1 oder 2, wobei der zweite Startschritt (S250) eine Zeitspanne nach dem zweiten Zündschritt ausgeführt wird.

4. Startverfahren nach den Ansprüchen 2 und 3, wobei der zweite Startschritt (S250) ausgeführt wird, wenn die Temperatur (T) nach (24) der Brennkammer (22) einen zweiten vorbestimmten Temperaturwert (T2) erreicht hat.

5. Startverfahren nach Anspruch 1 oder 2, wobei der zweite Startschritt (S250) gleichzeitig mit dem zweiten Zündschritt (S230) ausgeführt wird.

6. Startverfahren nach einem der Ansprüche 1 bis 5, wobei der Starter (44) und die Zündvorrichtung (32) abgeschaltet werden, nachdem die Welle (12) einen dritten vorbestimmten Geschwindigkeitswert (NG3) erreicht hat.

7. Startverfahren nach einem der Ansprüche 1 bis 6, wobei die Brennkammer ferner einen Startinjektor (28) umfasst, wobei der Startinjektor im Laufe des ersten Zündschrittes Treibstoff in die Brennkammer einspritzt, wobei der Startinjektor im Laufe des Abschaltschrittes abgeschaltet wird und wobei der Startinjektor im Laufe des zweiten Zündschrittes Treibstoff in die Brennkammer einspritzt.

8. Verfahren nach den Ansprüchen 6 und 7, wobei der Startinjektor abgeschaltet wird, nachdem die Welle den dritten vorbestimmten Geschwindigkeitswert (NG3) erreicht hat.

9. Computerprogramm, ausgeführt auf einem Computer (40), das Befehle für die Ausführung der Schritte des Startverfahrens nach einem der Ansprüche 1 bis 8 umfasst.

10. Durch einen Rechner lesbarer Speicherträger (42), auf dem ein Computerprogramm nach Anspruch 9 gespeichert ist.

11. Rechner (40) für einen Turbomotor, umfassend einen Speicherträger nach Anspruch 10.

## Claims

1. A method of starting a turbomachine (10), said turbomachine comprising:
· a combustion chamber (22) having an ignitor device and at least one main injector (30), said chamber presenting an outlet;
· a shaft (12) connected to a compressor wheel (14) arranged upstream from the combustion chamber in order to feed it with compressed air; and
· a starter (44) connected to said shaft;
said method comprising:
· a first starting step during which the starter is actuated in order to drive the shaft in rotation;
· a first ignition step during which fuel is injected into the combustion chamber, the ignitor device being actuated;
said method being **characterized in that** it further comprises a re-try step (S200) that is performed if the main injector (30) has not ignited when the shaft has reached a first predetermined speed value (NG1), said retry step comprising:
· a stop step (S210) during which the starter and the ignitor device are stopped;
· a second ignition step (S230) during which fuel is injected into the combustion chamber, the ignitor device being actuated, said second ignition step being performed when the speed of rotation of the shaft reaches a second predetermined speed value (NG2); and
· a second starting step (S250) during which the starter is actuated once more in order to drive the shaft in rotation.

2. A starting method according to claim 1, wherein the stop step (S210) is performed if the temperature (T) at the outlet from the combustion chamber, as measured when the shaft (12) has reached the first predetermined speed value (NG1), is lower than a first predetermined temperature value (T1).

3. A starting method according to claim 1 or claim 2, wherein the second starting step (S250) is performed after a certain lapse of time since the second starting step.

4. A starting method according to claims 2 and 3, wherein the second starting step (S250) is performed when the temperature (T) downstream (24) from the combustion chamber (22) has reached a second predetermined temperature value (T2).

5. A starting method according to claim 1 or claim 2, wherein the second starting step (S250) is performed concomitant with the second ignition step (S230).

6. A starting method according to any one of claims 1 to 5, wherein the starter (44) and the ignitor device (32) are stopped after the shaft (12) has reached a third predetermined speed value (NG3).

7. A starting method according to any one of claims 1 to 6, wherein the combustion chamber also includes a starting injector (28), wherein said starting injector injects fuel into the combustion chamber during the first ignition step, wherein said starting injector is stopped during the stop step, and wherein said starting injector injects fuel into the combustion chamber during the second ignition step.

8. A method according to claims 6 and 7, wherein the starting injector is stopped after the shaft has reached the third predetermined speed value (NG3).

9. A computer program executed on a computer (40) and comprising instructions for executing steps of the starting method according to any one of claims 1 to 8.

10. A computer-readable storage medium (42) having a computer program according to claim 9 stored thereon.

11. A turbomachine computer (40) including a storage medium according to claim 10.
